Europäisches Patentamt

European Patent Office

Office européen des brevets

(11) Publication number: **0 294 740**
**A1**

# EUROPEAN PATENT APPLICATION

(21) Application number: 88108992.4

(22) Date of filing: 06.06.88

(51) Int. Cl.⁴: **E02D 17/20 , E02B 11/00 , E02D 3/10**

(30) Priority: 08.06.87 JP 141537/87

(43) Date of publication of application:
**14.12.88 Bulletin 88/50**

(84) Designated Contracting States:
**DE FR GB IT**

(71) Applicant: **PIONEER SANGYO KABUSHIKI KAISHA**
**4-12-8, Nishihashimoto**
**Sagamihara-shi Kanagawa-ken(JP)**

(72) Inventor: **Kumagai, Shigeto**
**4-12-8, Nishihashimoto**
**Sagamihara-shi Kanagawa-ken(JP)**

(74) Representative: **Blumbach Weser Bergen Kramer Zwirner Hoffmann Patentanwälte**
**Radeckestrasse 43**
**D-8000 München 60(DE)**

(54) **Drainpipe and method of inserting it.**

(57) Disclosed are a drainpipe (1) mainly used for the drainage of the soil of slopes, tunnels, etc. in mountainous regions and its method of execution.

The present invention is a drainpipe (1) having a conical cap (3) with an apex angle of acute angle and a slender pipe body(5) connected to the cap (3). Slits (5d, 5e, 5f) are formed along the peripheral surface of the said pipe having a central hole (5g) and conduit holes (5a, 5b, 5c) communiccated to the said slits. To drive the drainpipe into the soil a rigid push rod (6) is inserted into the central hole (5g), and after hitting the back end of the push rod and progressing the drainpipe underground, the push rod is taken out.

According to the present invention, water in the ground can be drained fully, quickly and easily, the occurrence of damage, such as landslide, etc. can be avoided, the mounting work is easy, and the drainage can be smoothly carried out even in case of a varied rock pressure.

## FIG. 6

## DRAINPIPE AND METHOD OF INSERTING IT

The present invention relates to a drainpipe and a method of inserting it into ground, and more particularly to a drainpipe mainly used for draining the soil of a slope (slant), tunnel, etc. in a mountainous region, etc.

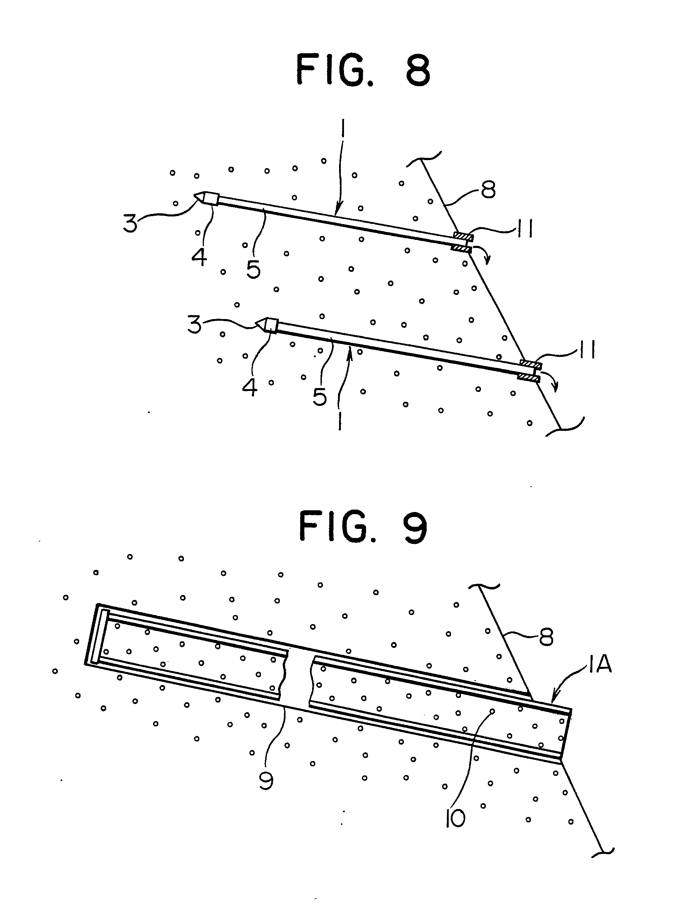

If there is water contained underground in a slant etc. in a mountainous region of weak ground, there is a danger of a landslide or landslip to occur. For this reason, it is necessary to take out in advance the water in the soil of the slant. Fig. 9 shows the outline of a draining method conventionally used.

First, an insertion hole 9 is prepared by boring, etc. in an adequate place of the slant 8. Then a drainpipe 1A as illustrated is inserted. The drainpipe 1A is formed by a through hole 10 bored into a slender hollow pipe having its tip closed. The rain water in the ground under the slant 8 enters into the drainpipe 1A from the through hole 10, is sent to the outlet side along the internal walls of pipe inserted in a slightly inclined way, and drained off.

In the said prior art, method of the insertion hole must be drilled in advance, which is troublesome, and if the drainpipe 1A is squeezed by the soil pressure, there is a problem that the drainage cannot be smoothly carried out.

An object of the invention is to settle the above mentioned problem and to provide a drainpipe which can effectively absorb the water underground in the slant, etc., which further can be inserted as it is without any need of drilling in advance an insertion hole, and which can carry out a smooth drainage even if pressed by the soil pressure, etc. and its method of execution.

According to the present invention, the drainpipe is composed of a conical cap having an acute apex angle and a slender drainpipe body connected to it, the said drainpipe body having slits along its peripheral surface in the axial direction, and a central hole and conduit holes formed around it in a cross-sectional configuration, the said central hole and conduit holes are formed extending over the overall length along the axial direction together with the said slits. Further according to the invention, to install the corresponding drainpipe underground, a rigid push rod is inserted into the central hole, and after hitting the back end of the push rod and progressing underground the drainpipe, the corresponding push rod is taken out.

One way of carrying out the invention is described in detail below with reference to drawings which illustrate only specific embodiments, and in which

Fig. 1 is a plan view of a conical cap of an embodiment of the present invention;

Fig. 2 is an axial cross-section of a connecting fixture of the embodiment;

Fig. 3 is a plan view of a drainpipe body of the embodiment;

Fig. 4 is a cross-section along line IV-IV in Fig.3;

Fig. 5 is a partial axial cross-section showing the overall construction of the drainpipe of the embodiment;

Fig. 6 is an axial cross-section for explaining the means to drive the drainpipe of the embodiment into the soil of the slant;

Fig. 7 is a plan view of a push rod of an embodiment different from the push rod shown in Fig. 6;

Fig. 8 is a cross-section showing the state where the drainpipe of the embodiment is driven into the soil of a slant; and

Fig. 9 is a cross-section showing the conventional drainpipe inserted into the soil of slant.

In the drawings, 1 is a drainpipe, 2 is a cap, 3 is a conical cap, 4 is a connecting fixture, 5 is a drainpipe body, 5a, 5b and 5c are conduit holes, 5d, 5e and 5f are slits, 5g is a central hole, 6 is a push rod, 7 is a pressing fitting, 8 is a slant, 9 is an insertion hole, and 10 is a through hole.

By being composed of an acutely angled cap in combination with a slender drainpipe body having a central hole and conduit holes, and by inserting a rigid push rod into the central hole of the drainpipe, and then giving an impact to the end, the drainpipe becomes possbile to be progressed underground directly into the soil of the slant. The water in the ground is conducted to the central hole and conduit holes through the said slits, and flows out from these to the back end side. Even is the drainpipe body is pressed by the soil pressure and deformed, since the communication between the said slits and the central hole and conduit holes are not greatly obstructed, even in this state a drainage can be carried out satisfactorily.

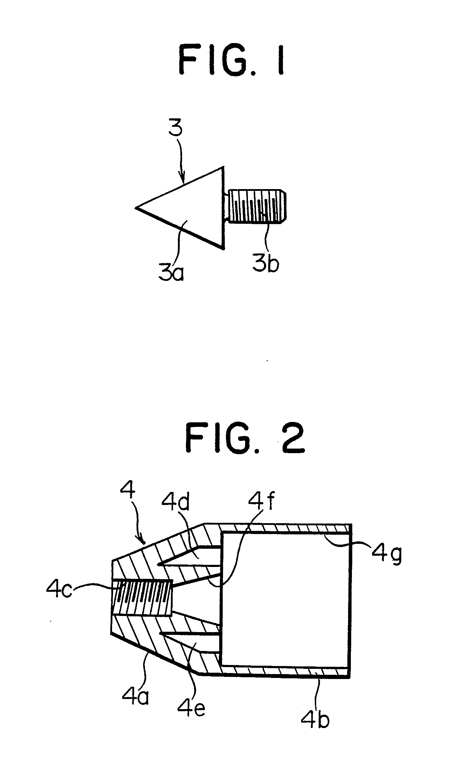

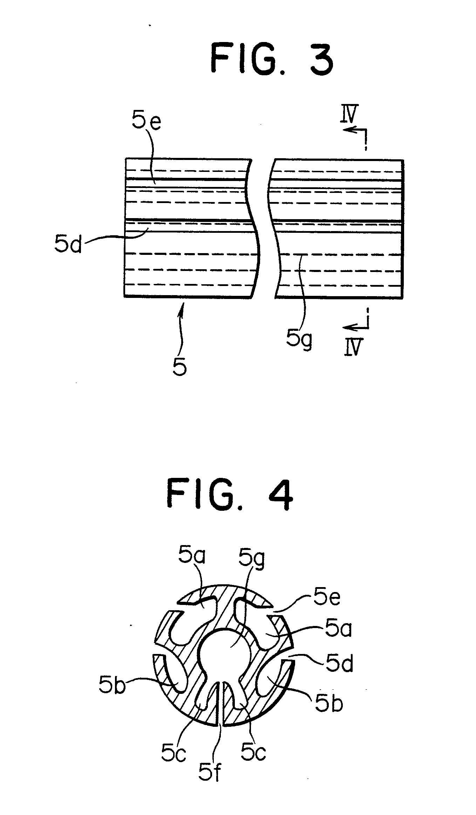

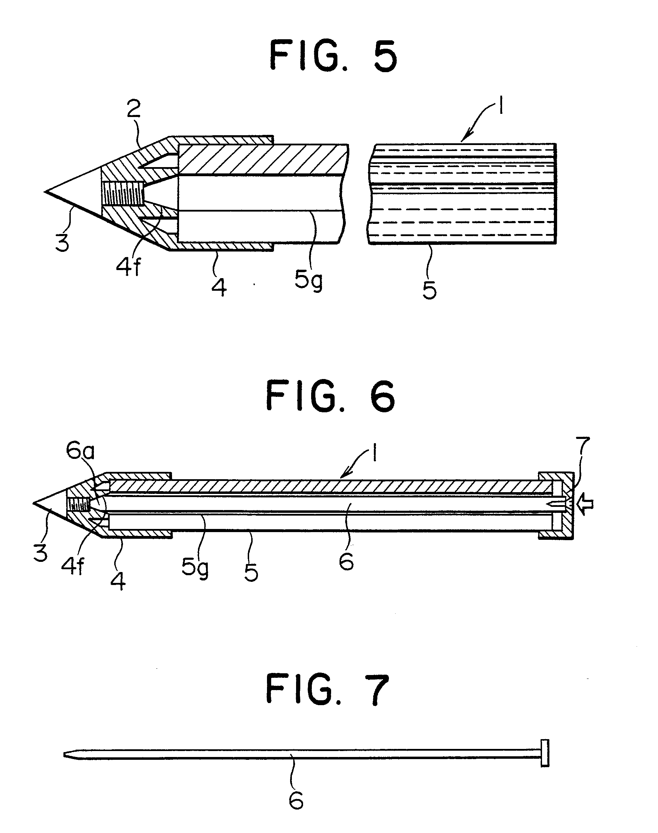

Hereinafter, embodiments of the present invention will be explained on the basis of the drawings. Fig. 1 to 4 are the drawings to explain component parts of a drainpipe I of the embodiment shown in Fig. 5. A cap shown in Fig. 5 is composed of a conical cap 3 shown in Fig. 1 and a connecting fixture 4 screwed together as shown in Fig. 2. The conical cap 3 is formed from a relatively hard material, for example steel material, and composed of a conical body 3a with its apex angle in the form of an acute angle and a thread part 3b integrally connecting to it. A connecting fixture 4 is composed of an inclination part 4a at the front side forming a taper corresponding to the taper angle of the conical cap 3 and a hollow cylindrical part 4b connected to it. In the inclination part 4a a thread part 4c into which the thread part 3b of the conical cap 3 is screwed, concave groove parts 4d and 4e formed at a position to communicate with conduit holes 5a, 5b. and 5c of a drainpipe body 5 described later, and a taper hole 4f are formed. In the hollow cylindrical part 4b a fit-in hole 4g for receiving the drainpipe body 5 is formed. As shown in Fig. 3, the drainpipe body 5 is formed as a hollow-shaped pipe body with a slender central hole 5g. Fig. 4 shows its cross-sectional configuration. Around the central hole 5g, conduit holes 5a, 5b and 5c with adequate cross-sectional areas are formed, respectively, at postions symmetrical to the central line. In the circumferential surface slits 5d, 5e and 5f are formed symmetricallY to the central line, respectively. The slit 5d is communicated to the conduit hole 5b, the slit 5e to the conduit hole 5a, and the slit 5f to the conduit hole 5c through the central hole 5g, respectively. Further, as shown in Fig. 3, conduit holes 5a, 5b and 5c. central hole 5g and slits 5d, 5e and 5f are formed extending over the overall length along the axial direction, respectively. In this connection, the circumference of the drainpipe body is formed with a diameter to fit into the fit-in hole 4g of the connecting fixture.

The connecting fixture shown in Fig. 2 has a complicate configuration, and is formed by synthetic resin materials, and can be easily manufactured by means of injection molding. Further, the drainpipe body 5 can be easily manufactured by means of extrusion molding.

Fig. 5 shows the overall construction of the drainpipe 1 composed by connecting the drainpipe body 5 and the cap 2 composed of the conical cap 3 and connecting fixture 4 as described above, the conical cap 3 is positioned at the tip, the drainpipe body 5 is extended backwardly in a long and slender way, and then forms the end. The central hole 5g of the drainpipe body 5 is connected to the taper hole 4f of the connecting fixture 4 in a concentrical way.

Fig 6 shows the means to drive the assembled drainpipe 1 into the soil of the slant (not illustrated). A push rod 6 of almost the same length as the drainpipe I is composed of a slender rod with an outside diameter such that it can be inserted into the central hole 5g, and at its top with a taper part 6a correspondingly connected to the taper hole 4f. In such a way, since the push rod is of a configuration size that can be well inserted and correspondingly connected to the central hole 5g, when hitting its end later on, vibrations in the lateral direction (so-called chatter) are not caused, and it can be utilized to push in the striking power effectively underground. In the state that the taper part 6a is correspondingly connected and bound to the taper hole 4f, the back end of the push rod 6 is projected a little from the back end of the drainpipe body 5. On the back end of the push rod 6 projected pressing fittings 7 are fixed by screw stoppers, etc. To install by insertion (install by striking) the drainpipe I into the soil of the slant, first the conical cap 3 is properly contacted to the face of the slant, and then the back end side is positioned in a slightly lowered state, and the pressing fitting 7 struck with a hammer (not illustrated) etc. By this the drainpipe body 1 comes to be pushed gradually into the slant face. Fig. 7 is a plan view of the push rod of an embodiment different from the push rod shown in Fig. 6.

Fig. 8 shows the state Where drainpipes 1 (two pipes in the illustration) are driven in the soil of the slant 8. The pushing work is stopped when the back end of the drainpipe 1 almost coincides with the surface of the slant face. A collar inserted into the back end of the drainpipe 1 is for decoration.

Then, the action of the present embodiment will be explained more in detail.

As described above, since the drainpipe 1 has the cap 2 of acute angle, it is easily inserted into the soil of the slant 8 by striking the back end of the drainpipe body 5 (for detail, pushing fitting 7). Therefore, unlike the prior art, there is no need to bore in advance an insertion hole 9, etc., and the work can be carried out quickly and simply.

The water contained in the soil of slant 8 intrudes into the pipe from the slits 5d, 5e and 5f. Since the slit 5d, etc. have been formed extending over the overall length, a great volume of the water is introduced into the pipe. The water introduced into the pipe flows to the conduit holes 5a, 5b, 5c and central hole 5g. Since the whole of the drainpipe I has been installed by inserting in the backwardly descending inclination state as shown in Fig. 8, the water entered into the conduit holes 5a, 5b and central hole 5g flows toward the rear, and is drained from the back end of the drainpipe 1. By connecting the back end of the drainpipe 1 with a drainage pipe, etc. not illustrated, the water taken out can be sent to an adequate place through the drainage pipe.

Even in the case that tentatively the drainpipe 1 is deformed by the soil pressure of the slant 8, there is no fear that all of the slits 5d, 5e and 5f are closed, and it is not considered that the communication among the slit 5d, etc., the conduit 5a, etc. and the central hole 5g is interrupted. Therefore, the smooth and good drainage will be kept possible always. By this, a drainage can be well made from a slant face or slope, tunnel, etc. in a mountainous region, etc., and the occurrence of collapse of the slant face, landslide, cave-in, etc. can be prevented.

In the present embodiment the cross-sectional configuration of the drainpipe body 5 has been made as illustrated, but is naturally not limited to this configuration.

As will be clear from the above explanation, according to the present invention, the water in the ground of tunnels, etc. and slant face in the mountainous region can be drained fullY, quickly and easily, preventing the occurrence of damage, the construction work is easy, and even in the state that a large soil pressure is charged, the smooth drain can be carried out.

## Claims

1. A drainpipe comprising a conical cap with an acute apex angle and a slender pipe body connected to the cap, slits being formed along the peripheral surface of the said pipe, having a central hole and conduit holes formed around it in its cross-sectional configuration, the central hole and conduit holes are formed extending over the overall length of the pipe body along with the said slits in the axial direction, and communicating with the said slits.

2. A method of inserting the drainpipe as claimed in claim 1, comprising the steps:

a rigid push rod is inserted into the central hole of the drainpipe, and after hitting the back end of the push rod and progressing the drainpipe underground, the push rod is taken out.

# FIG. 1

3

3a    3b

# FIG. 2

4    4d    4f

4c    4g

4a    4e    4b

# FIG. 3

# FIG. 4

# FIG. 5

# FIG. 6

# FIG. 7

EP 0 294 740 A1

# FIG. 8

# FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 401 569 (WATANABE) <br> * Pages 5-9; claim 1 * <br> --- | 1,2 | E 02 D 17/20 <br> E 02 B 11/00 <br> E 02 D 3/10 |
| Y | PATENT ABSTRACTS OF JAPAN, vol. 8, no. 20 (M-271)[1457], 27th January 1984; & JP-A-58 178 725 (PAIONIA SANGYO K.K.) 19-10-1983 <br> * Abstract * <br> --- | 1,2 | |
| Y | DE-A-2 753 100 (TREVISANI) <br> * Page 6, lines 6-11; claims; figures 1-3 * <br> --- | 1,2 | |
| A | GB-A-1 439 872 (WATANABE) <br> * Claims; figures 6-9 * <br> --- | 1-2 | |
| A | DE-C- 242 680 (KAFKA) <br> ----- | | |
| | | | TECHNICAL FIELDS SEARCHED (Int. Cl.4) |
| | | | E 02 B <br> E 02 D |

The present search report has been drawn up for all claims

| Place of search | Date of completion of the search | Examiner |
|---|---|---|
| THE HAGUE | 06-09-1988 | HANNAART J.P. |